# EUROPEAN PATENT APPLICATION

(11) **EP 4 782 795 A1**
(43) Date of publication of application: **29.07.2026**
(21) Application number: 25154200.7
(22) Date of filing: 27.01.2025
(51) Int. Cl.: G01F 1/66, G01F 1/667, G01S 7/526, G01S 15/10, G10K 11/178

(54) **A RESONANT-TRANSDUCER-BASED MEASUREMENT ASSEMBLY**

(71) Applicant: Vaisala, OYJ, 00421 Helsinki (FI)
(72) Inventor: KEITAANNIEMI, Joonas, 02240 ESPOO (FI); ASKOLA, Janne, 02200 ESPOO (FI); KAVANAGH, Benjamin, 00100 HELSINKI (FI)
(74) Representative: Berggren Oy

(57) **Abstract**

According to an example embodiment, a method (200) for operating a measurement assembly for a time-of-flight (ToF) measurement is provided, the method comprising: transmitting (202) a pulsed acoustic measurement signal from a first resonant transducer assembly (110) of the measurement assembly (100), where during each pulse the first resonant transducer assembly (110) is driven at a predefined driving frequency; receiving (204) an electrical reconstructed signal generated by a second resonant transducer assembly (120) of the measurement assembly (100) based on the acoustic measurement signal transmitted from the first resonant transducer assembly (110); detecting (206) a change in frequency within a pulse of the electrical reconstructed signal, and adjusting (208) at least one aspect of operation of the measurement assembly (100) based on the detected change in frequency.

## Description

### TECHNICAL FIELD

The present invention relates to a measurement arrangement provided by a pair of resonant transducers.

### BACKGROUND

Resonant transducers, such as piezoelectric transducers, that are capable of converting electrical energy into mechanical energy and converting mechanical energy into electrical energy are applicable for various applications. Non-limiting examples in this regard include usage of a resonant transducer as a sensor for measuring a quantity such as pressure, acceleration, temperature, strain, force, etc. or usage of a pair of resonant sensors in a measurement application that relies on transmission of a measurement signal from one resonant transducer for reception by another one, where the measurement may involve measuring a distance to an object (i.e. ranging), measuring a propagation time of the measurement signal between the two transducers involved, a medical measurement or a measurement that supports medical imaging, a measurement carried out for testing properties of materials, etc.

A resonant transducer applied for transmitting a measurement signal in a measurement application may be a passively driven one or an actively driven one: a passively driven resonant transducer vibrates at its resonant frequency in response to an activation signal supplied thereto and emits a measurement signal that conveys the resonant frequency for reception by another resonant transducer, whereas vibration of an actively driven resonant transmitter - and the measurement signal emitted therefrom - follows the variations of a driving signal supplied thereto. The choice between passive and active driving may be made, for example, in view of characteristics of the measurements to be carried out.

One particular application of measurements carried out via application of two (or more) resonant transducers is a time-of-flight (ToF) measurement based on passive or active driving of a first resonant transducer by an ultrasonic driving signal to generate a corresponding ultrasonic measurement signal for reception by a second resonant transducer. An example of an application of such a measurement principle is an anemometer apparatus provided for measuring wind speed and/or wind direction based on the ToF of the ultrasonic signal transmitted from one resonant transducer to another.

Since in many applications of such a measurement principle the ToF is measured over a relatively short distance (e.g. in ranges from a few centimeters to a few tens of centimeters), the resulting ToFs are relatively small and an accurate measurement of the ToF is critical to ensure reliably observing any minor changes therein. When carrying out such measurements in conditions that may vary in the course of the measurement process, e.g. outdoors, any disturbances that may have an effect on characteristics of the driving signal and/or on physical or operational characteristics of the resonant transducers involved may have a detrimental effect on the accuracy of the measurement results. Consequently, any techniques for improving reliability and robustness of such measurements regardless of operating conditions would be highly valuable.

### SUMMARY

It is an object of the present invention to provide a technique for improving accuracy and reliability of ToF measurements carried out using a pair of resonant transducers.

According to an example embodiment, a method for operating a measurement assembly for a time-of-flight (ToF) measurement is provided, the method comprising: transmitting a pulsed acoustic measurement signal from a first resonant transducer assembly of the measurement assembly, where during each pulse the first resonant transducer assembly is driven at a predefined driving frequency; receiving an electrical reconstructed signal generated by a second resonant transducer assembly of the measurement assembly based on the acoustic measurement signal transmitted from the first resonant transducer assembly; detecting a change in frequency within a pulse of the electrical reconstructed signal, and adjusting at least one aspect of operation of the measurement assembly based on the detected change in frequency.

According to an example embodiment, a measurement assembly for a ToF measurement is provided, the system measurement assembly comprising: a first resonant transducer assembly for transmitting an acoustic measurement signal and a second resonant transducer assembly for receiving the acoustic measurement signal; a first control portion arranged to operate the first resonant transducer assembly to transmit the acoustic measurement signal as a pulsed signal, where during each pulse the first resonant transducer assembly is driven at a predefined driving frequency; and a second control portion arranged to: receive an electrical reconstructed signal generated by the second resonant transducer assembly based on the acoustic measurement signal transmitted from the first resonant transducer assembly, detect a change in frequency within a pulse of the electrical reconstructed signal, and adjust at least one aspect of operation of the measurement assembly based on the detected change in frequency.

According to another example embodiment, an anemometer apparatus is provided, the apparatus comprising: one or more measurement assemblies according to the example embodiment described in the foregoing; and a parameter estimation portion arranged to determine one or more wind characteristics based on the respective ToFs obtained from the one or more measurement assemblies.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some components of a measurement apparatus according to an example;
Figure 2A illustrates a pulse of an electrical driving signal for generating a pulse of an acoustic measurement signal according to an example;
Figure 2B illustrates a pulse of an acoustic measurement signal according to an example;
Figure 3A illustrates a pulse of an electrical driving signal for generating a pulse of an acoustic measurement signal according to an example;
Figure 3B illustrates a pulse of an acoustic measurement signal according to an example;
Figure 4 illustrates a pulse of an electrical reconstructed signal according to an example;
Figure 5 illustrates a method according to an example; and
Figure 6 illustrates a block diagram of some components of an apparatus according to an example.

### DESCRIPTION OF SOME EMBODIMENTS

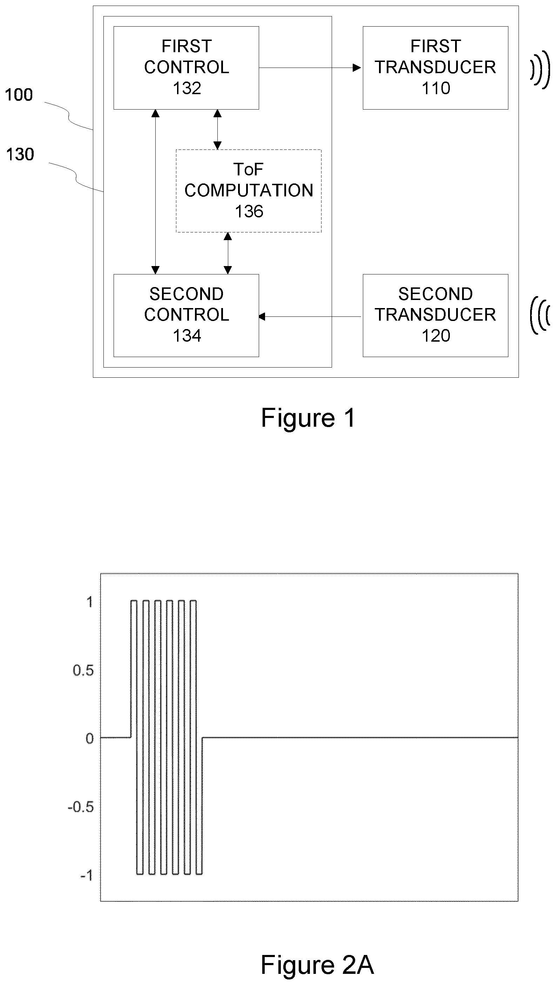

Figure 1 illustrates a block diagram of some components of a measurement assembly 100 according to an example. The measurement assembly 100 comprises a first resonant transducer assembly 110 that is provided for transmitting an acoustic measurement signal and a second resonant transducer assembly 120 that is provided for receiving the acoustic measurement signal transmitted from the first resonant transducer assembly 110, whereas the measurement assembly 100 is provided for time-of-flight (ToF) measurement based on the acoustic measurement signal transmitted from the first resonant transducer assembly 110 to the second resonant transducer assembly 120. Hence, the second resonant transducer assembly 120 is positioned with respect to the first resonant transducer assembly 110 such that the second resonant transducer assembly 120 is able to receive the acoustic measurement signal transmitted from the first resonant transducer assembly 110 either directly or via a reflection from a reflector assembly.

The measurement assembly 100 further comprises a first control portion 132 and a second control portion 134, where the first control portion 132 is provided for controlling at least some aspects associated with transmission of the acoustic measurement signal from the first resonant transducer assembly 110 and where the second control portion 132 is arranged for processing an electrical reconstructed signal generated by the second resonant transducer assembly 120 based on the acoustic measurement signal received thereat. In the example illustrated in Figure 1, the first control portion 132 and the second control portion 134 are shown as respective portions of a controller 130, which may be implemented as a computer apparatus comprising a memory and a processor, where the memory stores instructions that, when executed by the processor, cause implementing respective functionalities of the first and second control portions 132, 134 according to the present disclosure. In other examples, the first and second control portions 132, 134 may be implemented independently of each other while they are communicatively coupled to each other, where a respective computer apparatus of the above-described kind may be applied for implementing each of the first and second control portions 132, 134.

A resonant transducer assembly serving as the first resonant transducer assembly 110 or as the second resonant transducer assembly 120 comprises a respective electro-mechanical transducer that is arranged for converting electrical energy into mechanical energy and converting mechanical energy into electrical energy. Moreover, the resonant transducer assembly comprises an acoustic matching layer that is mechanically coupled to the electro-mechanical transducer. In such a transducer assembly design, vibration induced to the electro-mechanical transducer by an electrical driving signal transfers to the matching layer, resulting in transmission of acoustic waves whose amplitude and frequency follow those of the vibration transferring from the electro-mechanical transducer to the matching layer and, conversely, vibration induced to the acoustic matching layer due to an acoustic waves directed thereat transfers to the electro-mechanical transducer, resulting in generation of an electrical signal whose electrical characteristics (e.g. current and/or voltage) vary in accordance with the vibrations transferring from the matching layer to the electro-mechanical transducer. According to an example, each of the first resonant transducer assembly 110 and the second resonant transducer assembly 120 are provided as a respective flexural transducer, which comprises an electro-mechanical transducer mechanically coupled to a diaphragm that serves as the acoustic matching layer described above.

The acoustic waves transmitted from the resonant transducer assembly or received at the resonant transducer assembly may be also referred to as a respective acoustic signal. For the purposes of the present disclosure, the term 'acoustic' is to be construed broadly, not only referring to frequencies within a human hearing range (approximately from 20 Hz to 20 kHz) but, additionally or alternatively, referring to infrasound frequencies below the human hearing range (e.g. below 20 Hz) and/or to ultrasound frequencies above the human hearing range (e.g. above 20 kHz).

A resonant transducer assembly has a resonant frequency that follows a resonant frequency of the electro-mechanical transducer applied in the resonant transducer while it is affected by the physical structure of the resonant transducer assembly, e.g. by the mechanical coupling between the electro-mechanical transducer and the acoustic matching layer, by respective materials of the electro-mechanical transducer and the acoustic matching layer are made of, by the shape and size of the acoustic matching layer, etc. According to various examples within the framework of the present disclosure, the first resonant transducer 110 and the second resonant transducer 120 are ones that operate at ultrasonic frequencies and hence have their resonant frequency at ultrasonic frequencies. Moreover, the respective resonant frequencies of the first and second resonant transducers 110, 120 are substantially the same (i.e. as close to each other as possible). As an example in this regard, the resonant frequency of the first and second resonant transducers 110, 120 may be a frequency that is in a range from 30 to 500 kHz.

According to an example, the respective electro-mechanical transducer of the first and second resonant transducer assemblies 110, 120 is a piezoelectric transducer, whereas in other examples an electro-mechanical transducer of other type is applied. Non-limiting examples of the latter choice include capacitive and resistive electro-mechanical transducers. Regardless of the underlying electro-mechanical resonator type, it may be implemented, for example, as a respective MEMS device arranged to operate as a resonant electro-mechanical transducer of the respective type, where the acronym MEMS stands for a micro-electromechanical system.

Along the lines described in the foregoing, in general, a resonant transducer assembly serving as the first resonant transducer assembly 110 or as the second resonant transducer assembly 120 may be passively driven or actively driven. In consideration of driving the resonant transducer assembly by an electrical signal to cause transmission of acoustic waves from the transducer assembly, passive driving may be considered as an activation of the electro-mechanical transducer to vibrate at its resonant frequency, resulting in transmission of acoustic waves at a resonant frequency of the resonant transducer assembly. In contrast, active driving involves driving of the electro-mechanical transducer of the resonant transducer assembly by an electrical driving signal whose electrical characteristics (e.g. current and/or voltage) vary in accordance with a predefined driving frequency, which results in the resonant transducer assembly transmitting acoustics waves at a frequency that is characteristic of the combination of the driving frequency and the driving frequency. In consideration of driving the resonant transducer assembly by an acoustic signal directed thereat, the driving is implicitly active and it results in the resonant transducer assembly generating an electrical signal whose electrical characteristics (e.g. current and/or voltage) vary in accordance with the frequency conveyed in the acoustic waves.

Further in this regard, when initiating active driving of a resonant transducer assembly either by an electrical or an acoustical signal that represents a certain frequency that is different from the resonant frequency of the respective resonant transducer assembly, the vibration of the electro-mechanical transducer starts with the certain frequency while it gradually settles to a vibration frequency that is characteristic of the combination of the certain frequency and the resonant frequency (e.g. a sum of the certain frequency and the resonant frequency). Moreover, when the active driving is terminated, the resonant transducer assembly continues vibration at its anti-resonant frequency at a gradually declining amplitude (so-called ringing).

In the framework of the measurement assembly 100, active driving of the first resonant transducer 110 is applied to transmit the acoustic measurement signal therefrom, whereas reception of the acoustic measurement signal at the second resonant transducer assembly 120 likewise serves as active driving of the second resonant transducer assembly 120 by the acoustic measurement signal. These aspects are described in further detail via the examples provided in the following.

When initiating active driving of the first resonant transducer assembly 110 by an electrical signal that represents the applied driving frequency and that is different from its resonant frequency, the vibration starts at the driving frequency while it gradually settles to a vibration frequency that is characteristic of the combination of the applied driving frequency and the resonant frequency, thereby providing a delay in the acoustic signal emitted from the first resonant transducer assembly 110 settling to the vibration frequency. Along similar lines, when initiating active driving of the second resonant transducer assembly 120 by the acoustic measurement signal received from the first resonant transducer assembly 110 and representing a frequency that is different from the resonant frequency of the second resonant transducer assembly 120, the vibration starts at the frequency of the acoustic measurement signal while it gradually settles to a certain vibration frequency that is characteristic of the combination of the frequency of the acoustic measurement signal and the resonant frequency, and hence there is a delay in the electrical signal generated at the second resonant transducer assembly 120 settling to the vibration frequency.

Herein, the delays involved in the acoustic measurement signal transmitted from the first resonant transducer assembly 110 and the electrical signal generated in the second resonant transducer assembly 120 settling to the respective vibration frequency depends on the difference between the resonant frequency of the respective resonant transducer assembly 110, 120 and the frequency driving the respective resonant transducer assembly 110, 120. In this regard, assuming the difference between the resonant frequency and the frequency driving the transducer assembly is in a range of a few kHz, the delay may be up to a few tens of microseconds.

The first control portion 132 is arranged to operate the first resonant transducer assembly 110 to transmit the acoustic measurement signal as a pulsed signal, where during each pulse of the acoustic measurement signal the first resonant transducer assembly 110 is driven at a predefined driving frequency. A pulse of the acoustic measurement signal may be also considered as and referred to as a transmission burst. The first control portion 132 may be arranged to generate pulses according to a predefined schedule, e.g. at a predefined pulse transmission frequency, where a suitable pulse transmission frequency may be chosen in view of characteristics and/or requirements of the measurements to be carried out via operation of the measurement assembly 100 and/or in accordance with the applied driving frequency. Herein, the pulse transmission frequency is significantly lower than the driving frequency and the resonant frequencies of the first and second resonant transducer assemblies 110, 120, where the pulse transmission frequency may be chosen in consideration of the resonant frequencies of the first and second resonant transducer assemblies 110, 120 in view of a range of applicable driving frequencies. As an example in this regard, the pulse transmission frequency may be chosen from a range from 100 Hz to 3 kHz, whereas examples of the driving frequency and the resonant frequencies are discussed in the following.

As described in the foregoing, the first resonant transducer assembly 110 is actively driven, where the active driving may be provided by the first control portion 132 driving the first resonant transducer assembly 110 by an electrical driving signal that represents the currently applied driving frequency. In this regard, a portion of the electrical driving signal applied for generating a pulse of the acoustic measurement signal may be considered as and referred to as a (corresponding) pulse of the driving signal. According to an example, the driving signal for a pulse of the acoustic measurement signal may have a constant or substantially constant amplitude, whereas in another example the amplitude may be various over the pulse in a predefined manner.

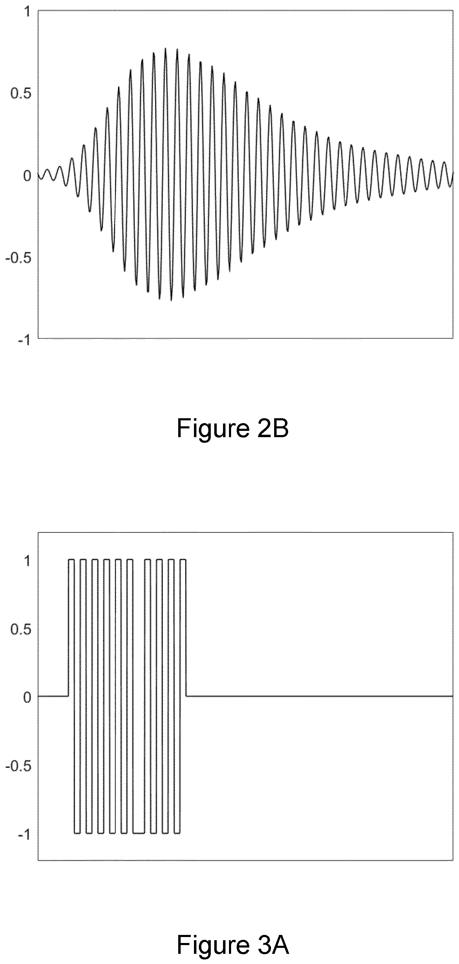

The driving frequency applied for operating the first resonant transducer assembly 110 to transmit the acoustic measurement signal is predefined in that it is defined prior to transmission of a pulse of the acoustic measurement signal and the driving frequency remains constant throughout the pulse. Consequently, the signal level during a pulse of the electrical driving signal oscillates at the driving frequency, which results in transmission of a corresponding pulse of the acoustic measurement signal that aims at following the driving frequency. According to an example, the pulse of the electrical driving signal consists of a predefined number of cycles at the currently applied driving frequency. The number of cycles may be chosen in accordance with characteristics and/or requirements of the measurements to be carried out via operation of the measurement assembly 100 and/or in accordance with the applied driving frequency, whereas in various examples the number of cycles may be chosen from range from a few cycles to a few tens of cycles. It worth noting that the number of cycles in not necessarily an integer number, but e.g. half or a quarter of a cycle may be also considered. The resulting corresponding pulse of the acoustic measurement signal involves the same number of cycles as the corresponding pulse of the driving signal and the pulse has a (time-domain) envelope that gradually rises to a maximum amplitude within the pulse, followed by a gradual decline. As non-limiting examples in this regard, Figure 2A illustrates a pulse of the electrical driving signal that consists of six cycles, whereas Figure 2B shows the overall shape of the corresponding pulse of the acoustic measurement signal.

While the driving frequency is kept constant during a pulse, the driving frequency is, however, adjustable such that the driving frequency may be varied from one pulse of the acoustic measurement signal to another. In this regard, the driving frequency may be selectable from a predefined driving frequency range, which may be defined e.g. as a frequency range of predefined width around a predefined default driving frequency. As an example in this regard, the default driving frequency is the same or substantially same as the resonant frequency of the first resonant transducer 110, whereas the driving frequency range may be e.g. 5 to 30 % of the resonant frequency, centered around the default driving frequency. Hence, in view of the examples provided in the foregoing for the resonant frequency of the first resonant transducer assembly 110, in various examples also the default driving frequency may be an ultrasonic frequency e.g. within a range from 30 to 500 kHz.

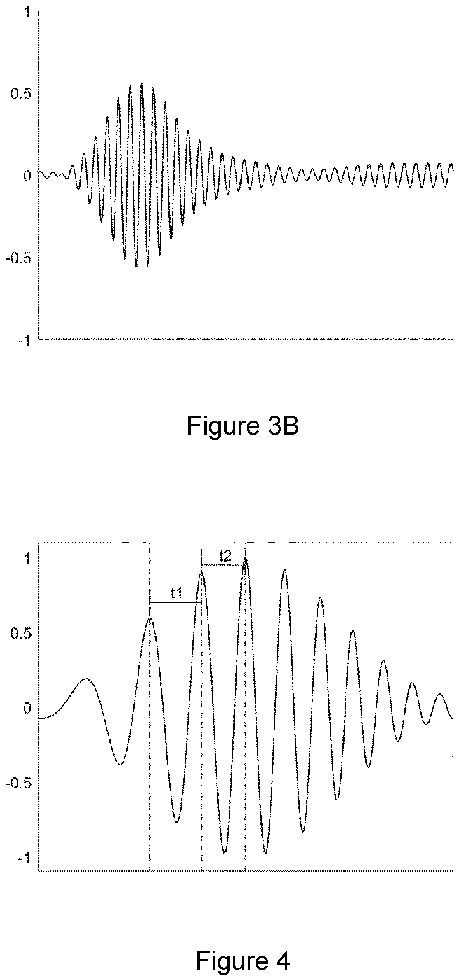

According to an example, a pulse of the electrical driving signal for generating a corresponding pulse of the acoustic measurement signal comprises a predefined phase shift at a predefined temporal position of the respective pulse. In other words, the predefined phase shift occurs at a predefined time offset from the beginning of a pulse of the electrical driving signal. In this regard, the temporal position of the of phase shift within the pulse may be determined as the number of cycles in the pulse of the electrical driving signal that precede the phase shift. As a non-limiting example in this regard, Figure 3A illustrates a pulse of the to the electrical driving signal that consists of ten cycles and that involves a phase shift of 180 degrees after six cycles from the beginning of the pulse, whereas Figure 3B shows the overall shape of the corresponding pulse of the acoustic measurement signal. In general, the temporal position and the extent of the phase shift may be chosen in view of characteristics and/or requirements of the measurements to be carried out via operation of the measurement assembly 100 and/or in accordance with the applied driving frequency. In non-limiting examples, the phase shift occurs at or close to a (temporal) center point of a pulse of the electrical driving signal and/or the phase shift is 90 degrees or 180 degrees. The phase shift within a pulse of the electrical driving signal and hence within the corresponding pulse of the acoustic measurement signal has at least the following consequences:
- The 'ringing' both in the first resonant transducer assembly 110 upon transmitting the pulse and in the second resonant transducer assembly 120 upon reception of the pulse attenuates faster (in comparison to a scenario where no phase shift is introduced).
- The maximum amplitude within the corresponding pulse of the acoustic measurement signal occurs at the temporal location of the phase shift and it becomes more pronounced (in comparison to a scenario where no phase shift is introduced).

Both these aspects contribute towards more reliable determination of the ToF based on the pulse of the acoustic measurement signal transmitted from the first resonant transducer assembly 110 and a version thereof captured at the second resonant transducer assembly 120, as described in some further detail in the following.

The second control portion 134 is arranged to receive an electrical reconstructed signal generated by the second resonant transducer assembly 120 based on the acoustic measurement signal transmitted from the first resonant transducer assembly 110. In this regard, the electrical reconstructed signal is a pulsed signal with its pulses substantially following the schedule and structure of the corresponding pulses of the acoustic measurement signal. Consequently, a pulse of the electrical measurement signal has a time-domain envelope that gradually rises to a maximum amplitude within the pulse, followed by a gradual decline. In particular, the pulse of the electrical reconstructed signal includes the same number of cycles as were applied in the pulse of the electrical driving signal applied for generating the corresponding pulse of the acoustic measurement signal transmitted from the first resonant transducer assembly 110, whereas in examples where the phase shift within a pulse of the driving signal is applied, the phase shift is captured also in the corresponding pulse of the electrical reconstructed signal.

The measurement assembly 100 (or an apparatus employing the measurement assembly 100) is applicable for determining the ToF from the first resonant transducer assembly 110 to the second resonant transducer assembly 120 based on respective timings of transmission of a pulse of the acoustic measurement signal from the first resonant transducer assembly 110 and its reception at the second resonant transducer assembly 120, whereas the best available estimates of the pulse of the acoustic measurement signal actually transmitted from the first resonant transducer 110 and of its version received at the second resonant transducer assembly 120 are, respectively, the corresponding pulse of the electrical driving signal applied at the first control portion 132 and the corresponding pulse of the electrical reconstructed signal received at the second control portion 134.

In this regard, determination of the ToF involves identifying a time difference between supplying a pulse of the electrical driving signal to the first resonant transducer assembly 110 and generation of the corresponding pulse of the electrical reconstructed signal at the second resonant transducer assembly 120. In other words, the ToF is determined based on the propagation time of the acoustic signal from the first resonant transducer assembly 110 to the second resonant transducer assembly 120. In this regard, the ToF determination may rely on a time difference between respective time reference positions within the pulse of the electrical driving signal and within the corresponding pulse of the electrical reconstructed signal. In various examples, the time reference position may be the beginning of the respective pulse, the ending of the respective pulse, or a predefined (temporal) position within the respective pulse that occurs after a predefined number of cycles from the beginning of the respective pulse.

However, due to the above-described phenomenon of the actively driven resonant transducer assembly settling to the respective vibration frequency (only) after a delay from the onset of a pulse that serves to drive the respective resonant transducer assembly results in a frequency change in a corresponding time portion of the pulse at its beginning. The change in frequency may be also considered as and referred to as a frequency variation or as a frequency shift. The change in frequency in the beginning of a pulse results in some uncertainty in correctly locating the time reference position within the respective pulse of the electrical reconstructed signal and consequently, runs a risk of inaccurate or even erroneous ToF determination based on the pulse of the electrical reconstructed signal involving the change in frequency. While in theory choosing and/or designing the first and second resonant transducer assemblies 110, 120 to have identical resonant frequencies would seem like an approach that enables eliminating the delay in the first and second resonant transducer assemblies 110, 120 settling to the respective vibration frequency and hence also eliminating the change in frequency within the pulses of the electrical reconstructed signal, this typically cannot be accomplished in a real-life application scenarios e.g. for the following reasons:
- Even though the design of the measurement assembly 100 may aim at employing the first resonant transducer assembly 110 and the second resonant transducer assembly 120 that are identical in terms of their respective resonant frequencies, in a practical implementation the respective resonant frequencies of the first and second resonant transducer assemblies 110, 120 are typically not truly identical but a minor deviation between the two necessarily occurs.
- In particular, in any real-life operating conditions, especially outdoors, the respective resonant frequencies of the first and second resonant transducer assemblies 110, 120 typically change over time in accordance with the operating conditions. In this regard, e.g. changes in ambient temperature and/or in air humidity as well as water, moisture, dust, dirt, etc. accumulating on the first and/or second resonant transducer assemblies 110, 120 may result in substantial changes in the respective resonant frequencies of the first and/or second resonant transducer assemblies 110, 120.

In the measurement assembly 100 according to present disclosure, the above-discussed uncertainty associated with correctly locating the time reference position in a pulse of the electrical reconstructed signal is addressed via identifying possible presence of the change in frequency in the respective pulse and adjusting at least one aspect of operation of the measurement assembly 100 based on the identified change in frequency. Non-limiting examples of adjusting operation of the measurement assembly 100 based on detected change in frequency in a pulse of the electrical reconstructed signal include providing feedback based on the identified change in frequency to enable adjustment of the driving frequency for subsequent pulse(s) of the driving signal in order to reduce or even eliminate any negative effects arising from the identified change in frequency and using the identified change in frequency to apply a correction to the ToF determined based on the pulse of the electrical reconstructed signal that includes the change in frequency.

In the following, various examples pertaining the identification or detection of a change in frequency are described with references to an approach that involves the second control portion 134 providing the feedback to the first control portion 132 based on an identified or detected change in frequency within a pulse of the electrical reconstructed signal, whereas these examples readily generalize into applying the detected change in frequency as basis for any suitable adjustment in operation of the measurement assembly 100.

Along the lines described above, according to an example, the second control portion 134 is arranged to detect a change in frequency within a pulse of the electrical reconstructed signal and to provide feedback to the first control portion 132 based on the detected change in frequency for adjustment of the driving frequency to be applied by the first control portion 132 for generation of a subsequent pulse of the acoustic measurement signal. While the present disclosure predominantly describes this aspect via examples that refer to detection of a change in frequency within a single pulse of the electrical reconstructed signal and provision of the feedback accordingly, these operations may be carried out for a plurality of pulses of the electrical reconstructed signal, e.g. for all pulses of the electrical reconstructed signal.

In general, the second control portion 132 is arranged to detect the change in frequency within a pulse based on a predefined portion of the respective pulse. In an example, the predefined portion covers the duration of the respective pulse in its entirety, whereas in another example the predefined portion is a predefined sub-portion of the respective pulse. As non-limiting examples of the latter, the predefined sub-portion may comprise, for example, a time period of a predefined duration in the beginning of the respective pulse, a time period of predefined duration that precedes a peak of maximum amplitude within the respective pulse, a predefined number of cycles in the beginning of the pulse, a predefined number of cycles that precede the peak of maximum amplitude within the respective pulse. In these examples, the suitable duration of the time period or the predefined number of cycles may be chosen in accordance with the duration of the respective pulse, the driving frequency applied for the respective pulse and/or the number of cycles included in the respective pulse.

According to an example, detection of the change in frequency within the predefined portion of a pulse of the electrical reconstructed signal is based on respective durations of at least two signal cycles within the predefined portion of the respective pulse. As an example in this regard, the second control portion 134 may determine a first cycle duration for a first cycle and a second cycle duration for a second cycle, where the first cycle precedes the second cycle, and determine possible presence of the change in frequency based on a difference between the first and second cycle durations. In an example, the first and second cycles may be consecutive cycles within the predefined portion of the respective pulse, whereas in another example the first and second cycles are non-consecutive ones. In various examples, any cycle duration considered in detection of the change in frequency may be determined via determining the time difference between a pair of consecutive peaks (e.g. a pair of consecutive local maxima) within the predefined portion of the respective pulse, via determining the time difference between a pair of consecutive negative peaks' (e.g. a pair of consecutive local minima) within the predefined portion of the respective pulse, via determining the time difference between a pair of consecutive zero-crossings of increasing signal level within the predefined portion of the respective pulse, or via determining the time difference between a pair of consecutive zero-crossings of decreasing signal level within the predefined portion of the respective pulse.

Figure 4 illustrates an example in this regard, where determination of the change in frequency within a pulse of the electrical reconstructed signal is based on two consecutive signal cycles that precede the peak of maximum amplitude within the respective pulse. In particular, detection of the change in frequency in the framework of the example of Figure 4 may involve the following:
- locating the peak of the maximum amplitude within a pulse and the two consecutive peaks that precede the peak of maximum amplitude;
- determine a first cycle duration T1 as the time difference between the first and second ones of the located peaks;
- determine a second cycle duration T2 as the time difference between the second and third ones of the located peaks; and
- detect the change in frequency based on a difference between the first cycle duration T1 and the second cycle duration T2.

Hence, the above-described example detects the change in frequency based a sub-portion of the respective pulse that covers the two consecutive cycles that terminate at the location of the peak of maximum amplitude within the respective pulse. The example of Figure 4 readily generalizes into an approach that involves detecting the change in frequency in consideration of a sub-portion of the respective pulse that terminates at the peak of the maximum amplitude within the respective pulse, where the first cycle duration T1 is defined as the time difference between a first pair of consecutive peaks and the second cycle duration T2 is determined as the time difference between a second pair of peaks, where the first and second cycles are any peaks within the sub-portion under consideration.

According to an example, the feedback provided based on the detected change in frequency comprises an indication of an extent of the detected change in frequency and, consequently, the first control portion 132 is arranged to determine the adjustment to be applied to the driving frequency based on the extent of the detected change in frequency. In another example, the second control portion 134 is arranged to determine the adjustment to be applied to the driving frequency based on the extent of the detected change in frequency and the feedback provided based on the detected change in frequency comprises an indication of the adjustment to be applied in the driving frequency by the first control portion 132. In both these scenarios, the adjustment is determined based at least in part on a predefined mapping between the extent of change in frequency and the adjustment to be applied in the driving frequency.

In this regard, the detection of the (presence of) change in frequency within the predefined portion of a pulse according to the example provided in the foregoing may further comprise determining the extent of change in frequency. As an example in this regard, the difference between the first cycle duration (e.g. T1) and second cycle duration (e.g. T2) may be converted into a corresponding extent of change in frequency to be included in the feedback provided to the first control portion 132 or to be applied in the second control portion 134 for determining the adjustment to be applied in the driving frequency for inclusion in the feedback provided to the first control portion 132. In some examples, the determined extent of change in frequency may be also applied for controlling provision of the feedback to the first control portion 132, e.g. such that the feedback is provided only in scenarios where the extent of change in frequency exceeds a predefined threshold value.

The above-described mapping between the extent of change in frequency and the adjustment to be applied in the driving frequency may be provided via application of predefined frequency adjustment mapping data, which defines the extent of frequency adjustment to be applied as a function of the extent of change in frequency. The frequency adjustment mapping data may be provided, for example, in form of a mapping table or a mapping function. In one example, the frequency adjustment mapping data is tailored for a specific transducer type, whereas due to subtle variations in the respective resonant frequencies of different instances of the resonant transducer assemblies that designed to be substantially similar to each other, in another example the frequency adjustment mapping data is tailored for the specific pair of the first and second resonant transducer assemblies 110, 120 employed by the measurement assembly 100. The frequency adjustment mapping data may be derived, e.g. upon manufacturing or upon configuring the measurement assembly 110, via an experimental procedure that accounts for a range of changes in frequency that is considered likely to occur in the intended application of the measurement assembly 110.

The frequency adjustment mapping data is defined such that it aims at defining the corresponding amount of adjustment to be applied to the driving frequency to significantly reduce or completely eliminate the effect arising from the change in frequency for a plurality of different extents of change in frequency within a pulse that cover a desired range of changes in frequency. Hence, when successfully applied, the adjustment of the driving frequency results in significantly reducing or completely eliminating the effect arising from the change in frequency within the pulse(s) of the electrical reconstructed signal, thereby facilitating their application for accurate and correct determination of the ToF.

The first control portion 132 may be arranged to apply the adjustment indicated in the feedback received from the second control portion 134 or derived therein to adjust the driving frequency for a subsequent pulse of the electrical driving signal in order to adjust the frequency of the corresponding acoustic measurement signal accordingly. According to an example, the adjustment of the driving frequency may be applied for the next pulse of the acoustic measurement signal to be transmitted after reception of the feedback. According to another example, the adjustment of the driving frequency may be allowed only for certain pulses of the acoustic measurement signal (e.g. according to a predefined pattern such as at every N:th pulse, where N > 1) and the adjustment of the driving frequency may be applied for the next pulse of the acoustic measurement signal for which the adjustment is allowed.

The measurement assembly 100 may further comprise a ToF computation portion 136 that is arranged to estimate the ToF, i.e. the propagation time of the acoustic measurement signal from the first resonant transducer 110 to the second resonant transducer 120, based on respective characteristics of a pulse of the electrical driving signal applied to derive the first resonant transducer assembly 110 and a corresponding pulse of the electrical reconstructed signal generated by the second resonant transducer assembly 120. Along the lines described in the foregoing, the ToF may be estimated as a time difference between supplying a pulse of the electrical driving signal to the first resonant transducer assembly 110 and generation of the corresponding pulse of the electrical reconstructed signal at the second resonant transducer assembly 120. Moreover, the estimation may rely on a time difference between respective time reference positions within the pulse of the electrical driving signal and within the corresponding pulse of the electrical reconstructed signal, where the time reference position may be e.g. the beginning of the respective pulse, the ending of the respective pulse, or a (temporal) position within the respective pulse that occurs after a predefined number of cycles from the beginning of the respective pulse.

As described in the following, another example of adjusting operation of the measurement assembly 100 based on the detected change in frequency in a pulse of the electrical reconstructed signal includes correction to the ToF determined based on such a pulse of the electrical reconstructed signal. According to an example in this regard, the ToF computation portion 136 is further arranged to correct the estimated ToF based on the extent of change in frequency determined by the second control portion 134, wherein an amount of said correction is determined based at least in part on a predefined mapping between the extent of change in frequency and the amount of correction to be applied to the estimated ToF.

The mapping between the extent of change in frequency and the amount of correction to be applied to the estimated ToF may be provided via application of predefined ToF correction mapping data, which defines the amount of ToF correction to be applied as a function of the extent of change in frequency. The ToF correction mapping data may be provided, for example, in form of a mapping table or a mapping function. As in the case of the frequency adjustment mapping data, in one example the ToF correction mapping data is tailored for a specific transducer type, whereas due to subtle variations in the respective resonant frequencies of different instances of the resonant transducer assemblies that designed to be substantially similar to each other, in another example the ToF correction mapping data is tailored for the specific pair of the first and second resonant transducer assemblies 110, 120 employed by the measurement assembly 100. The ToF correction mapping data may be derived, e.g. upon manufacturing or upon configuring the measurement assembly 110, via an experimental procedure that accounts for a range of changes in frequency that is considered likely to occur in the intended application of the measurement assembly 110.

The ToF computation portion 136 may be implemented along the lines described in the foregoing for the first and second control portions 132, 134, i.e. as a portion of the controller 130 or via operation of a computer apparatus that is separate from that applied to implement the first and second control portions 132, 134.

The examples described in the foregoing describe the first resonant transducer assembly 110 as an entity that transmits the pulsed acoustic measurement signal under control of the fist control portion 132 for reception by the second resonant transducer assembly 120 for detection of a change in frequency in a pulse of the electrical reconstructed signal via operation of the second control portion 134. In a variation of these examples, the second control portion 134 may be further arranged to operate the second resonant transducer assembly 120 to transmit the acoustic measurement signal in a manner described in the foregoing for the first control portion 132, *mutatis mutandis*, and the first control portion 132 may be arranged to process the electrical reconstructed signal generated by the first resonant transducer assembly 110 based on the acoustic measurement signal received from the second resonant transducer assembly 120 in a manner described in the foregoing for the second control portion 134, *mutatis mutandis.* Moreover, in this variation the measurement assembly 100 is arranged to operate such that the first resonant transducer assembly 110, and the second resonant transducer assembly 120 take turns in transmitting a sub-sequence of one or more pulses of the acoustic measurement signal (with the other one receiving it), thereby carrying out the ToF measurements in both directions over the signal path between the first and second resonant transducer assemblies 110, 120.

In another variation, the measurement assembly 100 further comprises a third transducer assembly and a third control portion arranged for controlling at some aspects of operation of the third transducer assembly in terms of transmission of the acoustic measurement signal therefrom for reception by the first and/or second resonant transducer assemblies 110, 120 in a manner described in the foregoing for the first control portion 132 operating the first resonant transducer assembly 110 and for processing the electrical reconstructed signal generated by the third resonant transducer assembly based on the acoustic measurement signal received from the first or second resonant transducer assembly 110, 120 in a manner described in the foregoing for the second control portion 134, *mutatis mutandis.* Moreover, in this variation the measurement assembly 100 is arranged to operate such that the first resonant transducer assembly 110, the second resonant transducer assembly 120 and the third resonant transducer assembly take turns in transmitting a sub-sequence of one or more pulses of the acoustic measurement signal (with the other one receiving it), thereby carrying out the ToF measurements in both directions over the respective signal paths between the first, second and third resonant transducer assemblies.

One or more measurement assemblies 100 according to the present disclosure may be employed in a measurement apparatus. A particular example in this regard is an anemometer apparatus that comprises one or more measurement assemblies 100 and a parameter estimation portion arranged to determine one or more wind characteristics based on the respective corrected ToFs obtained from the one or more measurement assemblies 100. Specific examples of an anemometer apparatus that may make use of the measurement assembly 100 according to the present disclosure are ones described in co-pending European patent applications no. 22215917, no. 22215975 and no. 23208444.

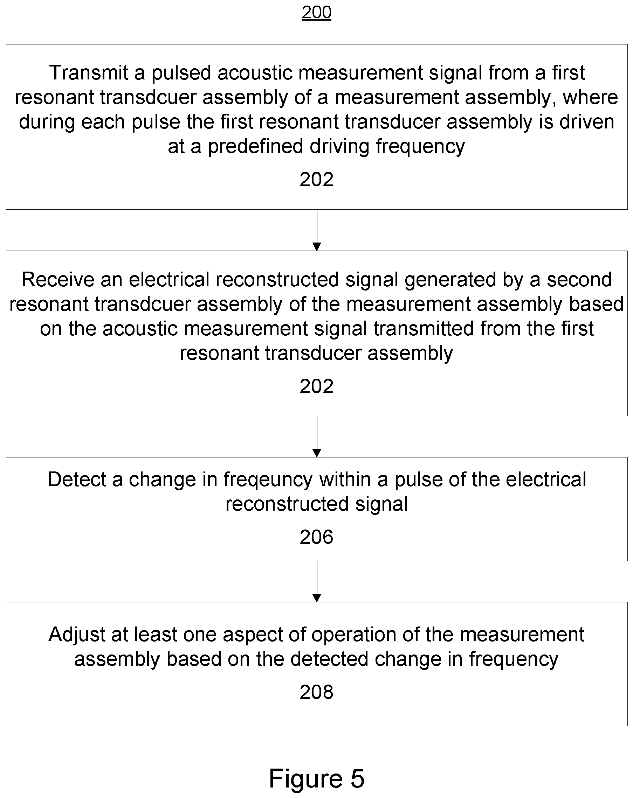

Some aspects of operation of the measurement assembly 100 according to the present disclosure may be described as steps of a method. As an example in this regard, Figure 5 illustrates a method 200 for ToF measurement, the method 200 comprising:
- transmitting the pulsed acoustic measurement signal from the first resonant transducer assembly 110 of the measurement assembly 100, where during each pulse the first resonant transducer assembly 110 is driven at a predefined driving frequency (block 202);
- receive an electrical reconstructed signal generated by a second resonant transducer assembly 120 of the measurement assembly 100 based on the acoustic measurement signal transmitted from the first resonant transducer assembly 110 (block 204);
- detect a change in frequency within a pulse of the electrical reconstructed signal (block 206); and
- adjust at least one aspect of operation of the measurement assembly 100 based on the detected change in frequency (block 208).

The method 200 may be modified or complemented in a number of ways without departing from the scope of the present disclosure, for example as described in the foregoing in the examples that pertain to operation and/or structure of the measurement assembly 100, *mutatis mutandis.*

As particular example of complementing the method 200, as also described in the foregoing via examples that refer to operation of the measurement assembly 100, the aspect of adjusting the at least one aspect of operation of the measurement apparatus 100 (cf. block 208) may comprise providing, based on the detected change in frequency, feedback for adjustment of the driving frequency for transmission of a subsequent pulse of the acoustic measurement signal from the first resonant transducer assembly 110. Moreover, in such an example the method 200 may further comprise-adjusting the driving frequency for the subsequent pulse of the acoustic measurement signal in accordance with the feedback.

In another example of complementing the method 200, as also described in the foregoing via examples that refer to operation of the measurement assembly 100, the method 200 further comprises estimating the ToF between the first and second resonant transducer assemblies 110, 120 based on respective characteristics of the pulse of the electrical driving signal and the corresponding pulse of the electrical reconstructed signal with the aspect of adjusting the at least one aspect of operation of the measurement assembly 100 (cf. block 208) comprising correcting the estimated ToF based on an extent of the detected change in frequency, wherein an amount of said correction is determined based at least in part on a predefined mapping between the extent of change in frequency and the amount of correction to be applied to the estimated ToF.:

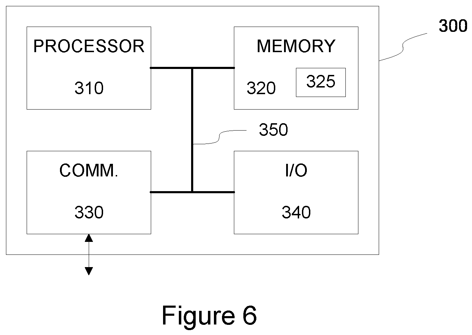

Figure 6 illustrates a block diagram of some components of a computer apparatus 300 that may be employed to implement operations described in the foregoing with references to the controller 130, to the first control portion 132, to the second control portion 134 and/or to the ToF computation portion 136 (as applicable). The apparatus 300 comprises a processor 310 and a memory 320. The memory 320 may store data and computer program code 325. The apparatus 300 may further comprise communication means 330 for wired or wireless communication with other apparatuses and/or user I/O (input/output) components 340 that may be arranged, together with the processor 310 and a portion of the computer program code 325, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the controller 130, to the first control portion 132, to the second control portion 134 and/or to the ToF computation portion 136 (as applicable). The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the controller 130, to the first control portion 132, to the second control portion 134 and/or to the ToF computation portion 136 (as applicable) when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the controller 130, to the first control portion 132, to the second control portion 134 and/or to the ToF computation portion 136 (as applicable). Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the controller 130, to the first control portion 132, to the second control portion 134 and/or to the ToF computation portion 136 (as applicable).

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the controller 130, to the first control portion 132, to the second control portion 134 and/or to the ToF computation portion 136 (as applicable). The computer-readable non-transitory medium may comprise a memory device or a record medium that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A method (200) of operating a measurement assembly (100) for a time-of-flight, ToF, measurement, the method (200) comprising:
transmitting (202) a pulsed acoustic measurement signal from a first resonant transducer assembly (110) of the measurement assembly (100), where during each pulse the first resonant transducer assembly (110) is driven at a predefined driving frequency;
receiving (204) an electrical reconstructed signal generated by a second resonant transducer assembly (120) of the measurement assembly (100) based on the acoustic measurement signal transmitted from the first resonant transducer assembly (110);
detecting (206) a change in frequency within a pulse of the electrical reconstructed signal, and
adjusting (208) at least one aspect of operation of the measurement assembly (100) based on the detected change in frequency.

2. A method (200) according to claim 1, wherein the first resonant transducer (110) is driven by a pulse of an electrical driving signal that represents the driving frequency.

3. A method (200) according to claim 2, wherein the pulse of the electrical driving signal consists of a predefined number of cycles at the driving frequency.

4. A method (200) according to claim 2 or 3, wherein the pulse of the electrical driving signal comprises a predefined phase shift after a predefined number of cycles from a beginning of the respective pulse.

5. A method (200) according to any of claims 1 to 4, wherein the change in frequency is detected based on a predefined portion of said pulse of the electrical reconstructed signal.

6. A method (200) according to claim 5, wherein the predefined portion comprises a sub-portion of said pulse that consists of a predefined number of cycles that precede a peak of maximum amplitude within said pulse.

7. A method (200) according to claim 5 or 6, wherein the change in frequency is detected based on respective durations (T1, T2) of at least two cycles within the predefined portion of said pulse.

8. A method (200) according to claim 7, wherein detecting the change in frequency comprises:
determining a first cycle duration (T1) as the time difference between a first pair of consecutive peaks within said portion of said pulse;
determining a second cycle duration (T2) as the time difference between a second pair of consecutive peaks within said portion of said pulse; and
detecting the change in frequency based on a difference between the first and second cycle durations (T1, T2).

9. A method (200) according to any of claims 1 to 8, wherein adjusting (208) at least one aspect of operation of the measurement assembly (100) comprises:
providing, based on the detected change in frequency, feedback for adjustment of the driving frequency for transmission of a subsequent pulse of the acoustic measurement signal from the first resonant transducer assembly (110); and
adjusting the driving frequency for said subsequent pulse of the acoustic measurement signal in accordance with the feedback.

10. A method (200) according to claim 9,
wherein the feedback comprises an indication of an extent of the detected change in frequency, and
wherein the method (200) comprises determining the adjustment to be applied to the driving frequency based on the extent of the detected change in frequency, wherein said adjustment is determined based at least in part on a predefined mapping between the extent of change in frequency and the adjustment to be applied in the driving frequency.

11. A method (200) according to claim 9,
wherein the method (200) comprises determining the adjustment to be applied to the driving frequency based on an extent of the detected change in frequency, wherein said adjustment is determined based at least in part on a predefined mapping between the extent of change in frequency and the adjustment to be applied in the driving frequency, and
wherein the feedback comprises an indication of the adjustment to be applied to the driving frequency.

12. A method (200) according to any of claims 1 to 12, wherein the acoustic measurement signal is an ultrasonic measurement signal.

13. A method (200) according to any of claims 1 to 12, further comprising:
estimating the ToF from the first resonant transducer (110) to the second resonant transducer (120) based on respective characteristics of a pulse of an electrical driving signal applied to drive the first resonant transducer assembly (110) and a corresponding pulse of the electrical reconstructed signal generated by the second resonant transducer assembly (120),
wherein adjusting (208) at least one aspect of operation of the measurement assembly (100) comprises correcting the estimated ToF based on an extent of the detected change in frequency, wherein an amount of said correction is determined based at least in part on a predefined mapping between the extent of change in frequency and the amount of correction to be applied to the estimated ToF.

14. A measurement assembly (100) for a time-of-flight, ToF, measurement comprising:
a first resonant transducer assembly (110) for transmitting an acoustic measurement signal and a second resonant transducer assembly (120) for receiving the acoustic measurement signal;
a first control portion (132) arranged to operate the first resonant transducer assembly (110) to transmit the acoustic measurement signal as a pulsed signal, where during each pulse the first resonant transducer assembly (110) is driven at a predefined driving frequency; and
a second control portion (134) arranged to:
receive an electrical reconstructed signal generated by the second resonant transducer assembly (120) based on the acoustic measurement signal transmitted from the first resonant transducer assembly (110),
detect a change in frequency within a pulse of the electrical reconstructed signal, and
adjust at least one aspect of operation of the measurement assembly (100) based on the detected change in frequency.

15. An anemometer apparatus comprising:
one or more measurement assemblies (100) according to claim 14; and
a parameter estimation portion arranged to determine one or more wind characteristics based on the respective ToFs obtained from the one or more measurement assemblies (100).
